(19) Europäisches Patentamt / European Patent Office / Office européen des brevets

(11) **EP 3 316 367 A1**

(12) # EUROPEAN PATENT APPLICATION
published in accordance with Art. 153(4) EPC

(43) Date of publication:
**02.05.2018 Bulletin 2018/18**

(21) Application number: **16814095.2**

(22) Date of filing: **27.05.2016**

(51) Int Cl.:
**H01M 4/96** (2006.01) **D04H 1/4242** (2012.01)
**H01M 4/86** (2006.01) **H01M 4/88** (2006.01)
**H01M 8/10** (2016.01)

(86) International application number:
**PCT/JP2016/065725**

(87) International publication number:
**WO 2016/208324 (29.12.2016 Gazette 2016/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.06.2015 JP 2015128653**

(71) Applicant: **Toray Industries, Inc.**
**Tokyo 103-8666 (JP)**

(72) Inventors:
• **KAJIWARA, Kentaro**
  **Otsu-shi**
  **Shiga 520-8558 (JP)**

• **SHIMOYAMA, Satoru**
  **Otsu-shi**
  **Shiga 520-8558 (JP)**
• **HORINOUCHI, Ayanobu**
  **Otsu-shi**
  **Shiga 520-8558 (JP)**
• **HORIGUCHI, Tomoyuki**
  **Otsu-shi**
  **Shiga 520-8558 (JP)**

(74) Representative: **Webster, Jeremy Mark et al**
**Mewburn Ellis LLP**
**City Tower**
**40 Basinghall Street**
**London EC2V 5DE (GB)**

(54) **GAS DIFFUSION ELECTRODE SUBSTRATE AND METHOD FOR MANUFACTURING SAME, GAS DIFFUSION ELECTRODE, MEMBRANE ELECTRODE ASSEMBLY, AND SOLID POLYMER FUEL CELL**

(57) An object of the present invention is to provide a gas diffusion electrode substrate that can facilitate both the supply of a reaction gas to a gas diffusion electrode and discharge of water as a reaction product. The present invention provides a gas diffusion electrode substrate including a carbon fiber nonwoven fabric having 30/cm$^2$ to 5000/cm$^2$ discontinuous protrusions dispersedly formed on at least one surface thereof, and a water repellent imparted to the carbon fiber nonwoven fabric.

1.2mm × 1.2mm

Figure 1

**EP 3 316 367 A1**

**Description**

TECHNICAL FIELD

The present invention relates to a gas diffusion electrode substrate for a polymer electrolyte fuel cell, and a method for manufacturing the same.

BACKGROUND ART

A polymer electrolyte fuel cell may suffer insufficient diffusion of hydrogen and air required for the reaction if a gas diffusion electrode in the cell is densified for the purpose of improving the electric conductivity and thermal conductivity. In addition, the polymer electrolyte fuel cell may have difficulty in achieving high power generation efficiency due to occurrence of a phenomenon called flooding, in which water generated by the reaction blocks pores in the catalyst layer and the gas diffusion electrode to hinder transport of hydrogen and air. Meanwhile, the polymer electrolyte fuel cell cannot achieve high power generation efficiency also when the cell is insufficiently humidified and the ionomer in the electrolyte membrane or the catalyst layer is dried, that is, when drying out occurs. In view of these cases, it is necessary to maintain the wet state of the ionomer in the electrolyte membrane or the catalyst layer with the water added to the supplied hydrogen and air and the water generated by the reaction, and to promptly discharge excessive water to the channel so that the water does not hinder the transport of hydrogen and air. Therefore, attempts have been made to facilitate the discharge of water by a method of subjecting a gas diffusion electrode to water repellency treatment with a fluororesin or the like, or a method of forming a microporous layer made from a fluororesin and conductive particles on a gas diffusion electrode. However, the effect of these attempts is still insufficient, and further improvement in performance is required.

For example, Non-Patent Document 1 describes that hydrophilizing the wall surface of the gas flow path prevents the liquid water from spreading in a film form to eventually hinder the supply of oxygen.

Patent Document 1 discloses a technique of grooving carbon fiber paper or a carbon cloth to form a groove in a direction different from the gas flow path formed in the separator, thereby making it possible to supply gas to a portion where no gas flows (rib portion), and also to facilitate the supply of a reaction gas and the removal of a reaction product.

Patent Document 2 discloses a technique of forming, by a water jet punching method, a sinusoidal groove in a sheet prepared from carbon fibers by papermaking, then firing the binder resin to give a gas diffusion electrode, and controlling the removal of a reaction product and moisture retention by the directions of the groove and the gas flow path formed in the separator.

Patent Documents 3 and 4 disclose a technique of pressing a polyacrylonitrile-based oxidized fiber sheet with a grooved roller to form a groove and, at the same time or subsequently, firing the sheet to give a gas diffusion electrode.

PRIOR ART DOCUMENTS

PATENT DOCUMENTS

Patent Document 1: Japanese Patent Laid-open Publication (Translation of PCT Application) No. 11-511289
Patent Document 2: Japanese Patent Laid-open Publication No. 2013-020843
Patent Document 3: Japanese Patent Laid-open Publication No. 2003-17076
Patent Document 4: Japanese Patent Laid-open Publication No. 2005-206968

NON-PATENT DOCUMENT

Non-Patent Document 1: Ishizaki, et al., Kagaku Kogaku Ronbunshu, 2014, vol. 40, pp. 320-326

SUMMARY OF THE INVENTION

PROBLEMS TO BE SOLVED BY THE INVENTION

The hydrophilized gas flow path described in Non-Patent Document 1 has an effect that it does not hinder the gas supply in the direction of gas flow, but makes water discharge in the inside and at the surface of the gas diffusion electrode insufficient.

In the gas diffusion electrode having a groove described in Patent Documents 1 to 4, when the direction of the gas flow path formed in the separator is deviated from the direction of the groove of the gas diffusion electrode, water as a reaction product that appears on the grooved surface of the gas diffusion electrode cannot be efficiently discharged, whereas when the directions are aligned, the gas cannot be supplied to a portion where no gas flows (under the rib).

Although the methods described in Patent Documents 3 and 4 are almost free from the entry of carbon powder and the deterioration in electric conductivity due to a broken portion, supply of a reaction gas and removal of a reaction product are insufficient as described above.

An object of the present invention is to provide a gas diffusion electrode substrate that can facilitate both the supply of a reaction gas to a gas diffusion electrode and discharge of water as a reaction product.

SOLUTIONS TO THE PROBLEMS

The present invention for achieving the above-mentioned object provides a gas diffusion electrode substrate including a carbon fiber nonwoven fabric having $30/cm^2$ to $5000/cm^2$ discontinuous protrusions dispersedly formed on at least one surface thereof, and a water repellent imparted to the carbon fiber nonwoven fabric.

EFFECTS OF THE INVENTION

The gas diffusion electrode substrate of the present invention can facilitate both the supply of a reaction gas to a gas diffusion electrode and discharge of water as a reaction product.

BRIEF DESCRIPTION OF THE DRAWINGS

Fig. 1 is an optical microscope photograph (high magnification) of a surface of a gas diffusion electrode substrate of the present invention obtained in Example 1.
Fig. 2 is an optical microscope photograph (low magnification) of the surface of the gas diffusion electrode substrate of the present invention obtained in Example 1.
Fig. 3 is an optical microscope photograph of a surface of a shaping member having indentations used in Example 1.

EMBODIMENTS OF THE INVENTION

<Gas diffusion electrode substrate>

[Carbon fiber nonwoven fabric]

The gas diffusion electrode substrate of the present invention includes a carbon fiber nonwoven fabric having discontinuous protrusions, and a water repellent imparted to the carbon fiber nonwoven fabric. The carbon fiber nonwoven fabric is obtained by heating a carbon fiber precursor nonwoven fabric in an inert gas atmosphere for carbonization. The carbon fibers are obtained by heating carbon fiber precursors in an inert gas atmosphere for carbonization, and a nonwoven fabric is obtained by fixing fibers making up a web by a method such as mechanical entangling, thermal bonding, or bonding with a binder. Further, the web is a sheet formed by laminating carbon fiber precursors.

The carbon fiber nonwoven fabric used in the present invention is preferably formed from carbon fibers having a fiber length exceeding 3 mm. When the fiber length exceeds 3 mm, the carbon fibers that constitute the wall surfaces of the discontinuous protrusions described later are easily oriented in the thickness direction, and the electric conductivity of the electrode in the thickness direction can be improved. It is more preferable that the fiber length of the carbon fibers exceed 10 mm. The upper limit of the fiber length is not particularly limited, but it is generally preferably 100 mm or less. In the present invention, the fiber length means the number average fiber length.

Carbon fibers having a smaller fiber diameter more readily achieve a higher apparent density and give a highly electrically and thermally conductive carbon fiber nonwoven fabric, but tend to reduce the average pore size of the carbon fiber nonwoven fabric and thus lower water discharge performance and gas diffusibility. Therefore, the fiber diameter of the carbon fibers is preferably 3 to 30 μm, more preferably 5 to 20 μm.

The average pore size of the carbon fiber nonwoven fabric is preferably 20 μm or more, more preferably 25 μm or more, even more preferably 30 μm or more. The upper limit of the average pore size is not particularly limited, but is preferably 80 μm or less, more preferably 70 μm or less. An average pore size of 20 μm or more provides high performance in gas diffusion and water discharge. An average pore size of 80 μm or less readily prevents drying out. In the present invention, the average pore size of the carbon fiber nonwoven fabric refers to a value measured by a mercury intrusion method. The average pore size can be measured using, for example, PoreMaster (manufactured by Quantachrome Instruments Japan G.K.). In the present invention, a value obtained by setting the surface tension $\sigma$ of mercury to 480 dyn/cm and setting the contact angle between mercury and a carbon fiber nonwoven fabric to 140° is employed as the average pore size.

The thicker the gas diffusion electrode substrate is, the larger the fuel cell is. Therefore, the gas diffusion electrode substrate is preferably as thin as possible as long as it exhibits its function, and is generally about 30 $\mu$m to 500 $\mu$m thick. In the present invention, the thickness of the gas diffusion electrode substrate is preferably 300 $\mu$m or less, more preferably 250 $\mu$m or less, even more preferably 200 $\mu$m or less. The thickness of the gas diffusion electrode substrate is more preferably 50 $\mu$m or more, even more preferably 70 $\mu$m or more. When the thickness of the gas diffusion electrode substrate is 50 $\mu$m or more, the gas diffusion in the in-plane direction is further improved, and the supply of the gas to the catalyst under the rib of the separator is further facilitated, so that the power generation performance is further improved both at low and high temperatures. On the other hand, when the thickness of the gas diffusion electrode substrate is 300 $\mu$m or less, the gas diffusion path and the water discharge path are shortened, and the electric conductivity and thermal conductivity can be improved, so that the power generation performance is further improved both at high and low temperatures. In the present invention, the thickness of the gas diffusion electrode substrate is the thickness measured in a state where an area of 5 mm or more in diameter is pressurized at a surface pressure of 0.15 MPa. Further, the thickness of the gas diffusion electrode substrate including the microporous layer described later means the thickness including the thickness of the microporous layer.

Although the basis weight of the carbon fiber nonwoven fabric is not particularly limited, it is preferably 15 g/m$^2$ or more, more preferably 20 g/m$^2$ or more. When the basis weight is 15 g/m$^2$ or more, the mechanical strength is improved, and the transportability in the manufacturing process can be improved. On the other hand, the basis weight is preferably 150 g/m$^2$ or less, more preferably 120 g/m$^2$ or less. When the basis weight is 150 g/m$^2$ or less, the gas diffusibility in the direction perpendicular to the surface of the carbon fiber nonwoven fabric is further improved.

In addition, the apparent density of the carbon fiber nonwoven fabric is preferably 0.10 to 1.00 g/cm$^3$. When the apparent density is 0.10 g/cm$^3$ or more, the electric conductivity and thermal conductivity can be improved, and the structure of the carbon fiber nonwoven fabric is hardly destroyed even by the pressure applied to the carbon fiber nonwoven fabric when used in a fuel cell. Further, when the apparent density is 1.00 g/cm$^3$ or less, the gas and liquid permeability can be improved. The apparent density is more preferably 0.20 to 0.80 g/cm$^3$, even more preferably 0.25 to 0.60 g/cm$^3$. Herein, the apparent density is obtained by dividing the basis weight of the carbon fiber nonwoven fabric by the thickness thereof.

When a carbide as a binder adheres to the contact points of carbon fibers, the contact area of the carbon fibers at the contact points increases, so that the electric conductivity and thermal conductivity are improved, resulting in high power generation efficiency. Examples of methods for imparting the binder include a method of impregnating a carbon fiber nonwoven fabric obtained after the carbonization with a binder solution or spraying a binder solution to a carbon fiber nonwoven fabric obtained after the carbonization, and then heating the fabric again in an inert atmosphere to carbonize the binder. In this case, examples of the usable binder include thermosetting resins such as a phenol resin, an epoxy resin, a melamine resin, and a furan resin. Among them, a phenol resin is particularly preferable from the viewpoint of high carbonization yield. Furthermore, as described later, a method of mixing a thermoplastic resin in the carbon fiber precursor nonwoven fabric in advance is also preferable. On the other hand, if no carbide as a binder adheres to the contact points, carbon fibers are easy to move relative to each other, so that it is advantageous in that the carbon fibers are flexible and easy to handle in the manufacturing process.

In the gas diffusion electrode substrate of the present invention, a carbon fiber nonwoven fabric having a plurality of discontinuous protrusions dispersedly formed on the surface thereof is used. The discontinuous protrusion means a protrusion which is not continuous from one end to the other end of the carbon fiber nonwoven fabric. When the discontinuous protrusions are formed, the protrusions do not obstruct the supply of the reaction gas and the discharge of water, and it is possible to facilitate both the supply of a reaction gas and discharge of water. Further, "dispersedly formed" means a state in which a plurality of discontinuous protrusions are arranged on the surface of the carbon fiber nonwoven fabric without the peripheries of the discontinuous protrusions being in contact with each other.

The arrangement pattern of the plurality of discontinuous protrusions is not particularly limited, but it is preferable that the discontinuous protrusions be formed so as to be substantially evenly distributed in the plane. In addition, it is preferable that the plurality of discontinuous protrusions be isotropically formed on the surface of the carbon fiber nonwoven fabric, and it is more preferable that they be formed in isotropic and equally spaced dots. It is to be noted that "isotropic" as used herein means that the distribution of discontinuous protrusions does not change even when the carbon fiber nonwoven fabric is rotated by 90°. In particular, when the carbon fiber nonwoven fabric is quadrangular in plan view, it means that the arrangement pattern of discontinuous protrusions viewed from at any side is constant. Meanwhile, the following aspect is also preferable: an aspect in which, in view of the different sites of the carbon fiber nonwoven fabric, that is, a site in which water discharge performance is prioritized and a site in which supply of the reaction gas is prioritized, the discontinuous protrusions are densely arranged near the inlet of the reaction gas where water drops as a reaction product are small and the reaction gas concentration is high, and the discontinuous protrusions are sparsely arranged near the outlet of the reaction gas where water drops are large and the reaction gas concentration is low.

In the present invention, the number of discontinuous protrusions per unit area of the carbon fiber nonwoven fabric is $30/cm^2$ to $5000/cm^2$, more preferably $100/cm^2$ to $1500/cm^2$. When the number of discontinuous protrusions is $30/cm^2$ or more, relatively small water drops also easily move in the gas flow path whose bottom surface is the top surfaces of the discontinuous protrusions. When the number of discontinuous protrusions is $5000/cm^2$ or less, it is easy to reduce the interaction between the protrusions and water drops.

Hereinafter, the shape of the discontinuous protrusions will be described. The description of discontinuous protrusions in the present specification, unless otherwise noted, refers to the shape of discontinuous protrusions on the assumption that the surface of the carbon fiber nonwoven fabric having the discontinuous protrusions thereon is trimmed until the carbon fiber nonwoven fabric has a thickness achieved by pressurization at 1 MPa in the thickness direction (hereinafter sometimes simply referred to as "thickness after pressurization"), in order to exclude the influence of the surface irregularities due to the carbon fibers themselves. The thickness of the carbon fiber nonwoven fabric after pressurization is determined by sandwiching a carbon fiber nonwoven fabric cut into 2.5 cm $\times$ 2.5 cm between metal plates having a surface area of 3 cm or more $\times$ 3 cm or more and a thickness of 1 cm or more, and applying a pressure of 1 MPa to the carbon fiber nonwoven fabric. Further, when the surface of the carbon fiber nonwoven fabric having the discontinuous protrusions thereon is trimmed until the carbon fiber nonwoven fabric has a thickness same as the thickness after pressurization, and thereby the discontinuous protrusions disappear or come to be unrecognizable as discontinuous protrusions, it is determined that no discontinuous protrusions are formed.

The transverse sectional shape of the discontinuous protrusion (the sectional shape obtained by cutting the discontinuous protrusion along a plane parallel to the surface of the carbon fiber nonwoven fabric) is not particularly limited, and may be any shape such as a circle, an ellipse, a doughnut shape, a square, a triangle, a polygon, and a star.

The longitudinal sectional shape of the discontinuous protrusion (the sectional shape obtained by cutting the discontinuous protrusion along a plane perpendicular to the surface of the carbon fiber nonwoven fabric) is also not particularly limited, and may be a substantially quadrangular shape whose size does not change in the height direction, or a substantially trapezoidal, substantially triangular, or substantially arcuate shape whose size changes in the height direction. It is preferable that the longitudinal sectional shape be a trapezoidal shape, an arcuate shape or the like whose width reduces with the height position in terms of improvement in the water discharge efficiency. From the viewpoint of ease of formation, it is most preferable that the discontinuous protrusions have a decrescent sectional shape in the height direction.

The size of the discontinuous protrusion should be appropriately adjusted in relation to the size of the gas flow path formed in the separator. However, since a presently general separator has a gas flow path having a width of several hundred micrometers to several millimeters, the diameter of the minimum circumscribed circle of the top surface of one discontinuous protrusion is preferably 1 cm or less. Herein, the top surface of the discontinuous protrusion means the cut surface of the discontinuous protrusion at the surface obtained by trimming the carbon fiber nonwoven fabric to the thickness after pressurization. The diameter of the minimum circumscribed circle of the top surface of one discontinuous protrusion is more preferably 5 mm or less, even more preferably 1 mm or less. The diameter of the maximum inscribed circle of one discontinuous protrusion is preferably 50 $\mu$m or more, more preferably 100 $\mu$m or more.

From the viewpoint of ensuring electric conductivity, the area of the top surface of one discontinuous protrusion is preferably 1000 $\mu m^2$ or more, more preferably 2000 $\mu m^2$ or more. In addition, from the viewpoint of ensuring the water discharge performance, the area is preferably 100 $mm^2$ or less, more preferably 10 $mm^2$ or less, even more preferably 1 $mm^2$ or less.

The top surface perimeter of the discontinuous protrusions present in a unit area is preferably 0.1 to 20 $km/m^2$, more preferably 0.5 to 10 $km/m^2$. When the top surface perimeter is 0.1 $km/m^2$ or more, a high water discharge effect can be obtained, whereas when it is 10 $km/m^2$ or less, the supply of the reaction gas is facilitated.

The height of the discontinuous protrusions is preferably 5 $\mu$m or more and 250 $\mu$m or less. When the height of the discontinuous protrusions is within the above-mentioned range, it is possible to achieve both the uniformity of gas supply and water discharge performance while maintaining the strength of the carbon fiber nonwoven fabric. The height of the discontinuous protrusions is more preferably 10 $\mu$m or more, even more preferably 15 $\mu$m or more. The height of the discontinuous protrusions is more preferably 200 $\mu$m or less, even more preferably 150 $\mu$m or less. Further, from the viewpoint of ensuring the water discharge performance, the height of the discontinuous protrusions is preferably 5% or more, more preferably 10% or more of the thickness of the carbon fiber nonwoven fabric after pressurization. The height of the discontinuous protrusions can be determined by observing the discontinuous protrusions with a laser microscope or the like, and measuring the height of the surface of the carbon fiber nonwoven fabric not having the discontinuous protrusions thereon, and the height of the plane present closer to the surface of the shaping member having openings therein by the height corresponding to the thickness of the carbon fiber nonwoven fabric after pressurization, that is, the top surfaces of the discontinuous protrusions, using a shape analysis application.

As described above, it is preferable that the discontinuous protrusions be formed in isotropic and equally spaced dots on the surface of the carbon fiber nonwoven fabric. In this case, the pitch of the discontinuous protrusions is preferably 1 mm or less, more preferably 0.8 mm or less. The pitch of the discontinuous protrusions is preferably 0.1 mm or more, more preferably 0.2 mm or more.

It is preferable that the carbon fiber nonwoven fabric have, in plan view, no broken fibers observed on wall surfaces of the discontinuous protrusions. The absence of broken fibers gives high electric conductivity. The state that the carbon fiber nonwoven fabric has no broken fibers observed on wall surfaces of the discontinuous protrusions is confirmed by observing the surface of the carbon fiber nonwoven fabric with an optical microscope, an electron microscope or the like, and confirming that there is no carbon fiber observed, around each discontinuous protrusion, that is oriented from outside of the discontinuous protrusion toward the inside thereof and that is discontinuous on the wall surface of the discontinuous protrusion. In the present invention, when the number of discontinuous protrusions having no broken fibers observed on the wall surfaces thereof is larger than the number of discontinuous protrusions having broken fibers observed on the wall surfaces thereof, it is assumed that "the carbon fiber nonwoven fabric has no broken fibers observed on wall surfaces of the discontinuous protrusions". Although it may be impossible to strictly distinguish a broken portion of a broken fiber from the end of a non-broken fiber, in such a case, the determination is made with the latter being included in the former. Usually, a fairly large number of discontinuous protrusions are formed. Accordingly, in the present invention, when 20 or more adjacent discontinuous protrusions are observed and broken fibers are not observed on the wall surfaces in the majority of the discontinuous protrusions, it is determined that the number of discontinuous protrusions having no broken fibers observed on the wall surfaces thereof is larger than the number of discontinuous protrusions having broken fibers observed on the wall surfaces thereof. It is preferable that such discontinuous protrusions having no broken fibers observed on the wall surfaces thereof be present in a percentage of 70% or more, more preferably 80% or more, even more preferably 90% or more of the whole discontinuous protrusions.

In the carbon fiber nonwoven fabric, it is preferable that at least part of carbon fibers that constitute wall surfaces of the discontinuous protrusions be oriented in the height direction of the discontinuous protrusions. The carbon fibers that constitute wall surfaces of the discontinuous protrusions are carbon fibers at least partially exposed on the wall surfaces of the discontinuous protrusions. The phrase that "the carbon fibers are oriented in the height direction of the discontinuous protrusions" means that the carbon fibers penetrate, of two planes that divide the discontinuous protrusions in the height direction into three equal parts (planes parallel to the bottom surface of the carbon fiber nonwoven fabric), both the two planes. Generally, when protrusions are formed on the carbon fiber nonwoven fabric, the area of contact with a member on the gas supply side (for example, a separator) is reduced compared to a case where no protrusions are formed, so that the electric conductivity and thermal conductivity are deteriorated. However, since the carbon fibers have higher electric conductivity and thermal conductivity in the fiber axis direction than in the fiber sectional direction, when the carbon fibers that constitute the wall surfaces of the discontinuous protrusions are oriented in the height direction of the discontinuous protrusions, the electric conductivity and thermal conductivity of the carbon fiber nonwoven fabric in the thickness direction are improved, and it is possible to compensate for the deterioration in electric conductivity and thermal conductivity due to formation of pores.

The presence of the carbon fibers oriented in the height direction of the discontinuous protrusions can be confirmed by observing the surface of the carbon fiber nonwoven fabric with a laser microscope or the like, and confirming, using a shape analysis application, the presence of carbon fibers that traverse both the intersection line between the plane that divide the discontinuous protrusions at the height of one third of the discontinuous protrusions and the inner wall surfaces of the discontinuous protrusions, and the intersection line between each plane that divide the discontinuous protrusions at the height of two thirds of the discontinuous protrusions and the inner wall surfaces of the discontinuous protrusions. Further, the presence of such carbon fibers can also be confirmed by observing any section of the carbon fiber nonwoven fabric including the discontinuous protrusions with a scanning electron microscope or the like, and confirming the presence of carbon fibers that traverse both two straight lines drawn parallel to the surface of the carbon fiber nonwoven fabric that each cross the discontinuous protrusions at the positions of one third and two thirds of the height of the discontinuous protrusions. It is preferable that two or more such carbon fibers, more preferably five or more such carbon fibers be present in one discontinuous protrusion.

Further, the carbon fibers oriented in the height direction of the discontinuous protrusions are preferably continuous to the top surfaces of the discontinuous protrusions since the effect of improving the electric conductivity and thermal conductivity in the height direction of the discontinuous protrusions is enhanced. The phrase that "the carbon fibers are continuous to the top surfaces of the discontinuous protrusions" means that the ends of the carbon fibers that constitute the wall surfaces of the discontinuous protrusions at the side of the top surface of the carbon fiber nonwoven fabric are bent or curved, and at least part of the carbon fibers are also exposed on the top surfaces of the discontinuous protrusions. When the carbon fiber nonwoven fabric is observed, it is preferable that at least part of the carbon fibers that constitute one wall surface of the discontinuous protrusions be continuous to the top surfaces of the discontinuous protrusions, and further constitute another wall surface of the discontinuous protrusions. That is, it is preferable that there be carbon fibers that constitute the wall surfaces at two positions in the discontinuous protrusions and are continuous to the top surfaces.

[Water repellent]

Generally, in a gas diffusion electrode substrate, a gas flow path is often subjected to hydrophilizing treatment so as not to hinder the supply of gas. In contrast, in the gas diffusion electrode substrate of the present invention, a water repellent is imparted to the carbon fiber nonwoven fabric as described above from the viewpoint of reducing the water transfer resistance on the top surfaces of the discontinuous protrusions. As a water repellent, a fluoropolymer is preferably used because it is excellent in corrosion resistance. Examples of the fluoropolymer include polytetrafluoroethylene (PTFE), a tetrafluoroethylene-hexafluoropropylene copolymer (FEP), and a tetrafluoroethylene-perfluoroalkyl vinyl ether copolymer (PFA).

Generally, it is determined that a water repellent is imparted to a carbon fiber nonwoven fabric if the contact angle at the time a 10-$\mu$L water drop is placed on the surface of the carbon fiber nonwoven fabric exceeds 120°. In the case where a fluoropolymer is used as a water repellent, in particular, it is confirmed that a water repellent is imparted to a carbon fiber nonwoven fabric by confirming that fluorine atoms are present on the surface of the fibers that constitute the carbon fiber nonwoven fabric through X-ray spectroscopy, or by detecting the fluorocarbon through TG-MS which is a combination of thermogravimetry and mass spectrometry.

The content of the water repellent in the gas diffusion electrode substrate is not particularly limited, but it is preferably 1% by mass to 20% by mass, more preferably 3% by mass to 10% by mass based on the carbon fiber nonwoven fabric.

Further, the water repellent may contain other additives. For example, a water repellent containing electrically conductive carbon particles is a preferable aspect since both the water repellency and electric conductivity can be achieved.

[Microporous layer]

The gas diffusion electrode substrate of the present invention may further include a microporous layer. The microporous layer is a layer that contains a carbon material and is formed on a surface of the gas diffusion electrode in contact with the catalyst layer, and is provided on a surface of the carbon fiber nonwoven fabric on which discontinuous protrusions are not formed, that is, on the bottom surface of the carbon fiber nonwoven fabric. The microporous layer suppresses flooding by promoting elimination of water from between the catalyst layer and the carbon fiber nonwoven fabric, and promotes reverse diffusion of water into the electrolyte membrane to suppress drying up.

Examples of the carbon material that constitute the microporous layer include carbon black materials such as furnace black, acetylene black, lamp black, and thermal black, scaly graphite, flaky graphite, earthy graphite, artificial graphite, expanded graphite, and thin graphite. In addition, linear carbon materials such as vapor-grown carbon fibers, single-walled carbon nanotubes, double-walled carbon nanotubes, multi-walled carbon nanotubes, carbon nanohorns, carbon nanocoils, cup-stacked carbon nanotubes, bamboo-shaped carbon nanotubes, and graphite nanofibers are also preferably used.

In addition, in order to promote the discharge of liquid water, the microporous layer preferably contains a water repellent. As the water repellent, a fluoropolymer having high corrosion resistance is preferably used. Examples of the fluoropolymer include polytetrafluoroethylene (PTFE), a tetrafluoroethylene-hexafluoropropylene copolymer (FEP), and a tetrafluoroethylene-perfluoroalkyl vinyl ether copolymer (PFA) .

The porosity of the microporous layer is preferably in the range of 60 to 85%, more preferably in the range of 65 to 80%, even more preferably in the range of 70 to 75%. When the porosity is 60% or more, the water discharge performance is further improved, and the flooding can be further suppressed. When the porosity is 85% or less, the water vapor diffusibility is relatively low, and the drying up can be further suppressed. Herein, the porosity of the microporous layer is measured using a sample for sectional observation obtained using an ion beam section processing apparatus by taking a photograph of the section at a magnification of 1000 times or more using a microscope such as a scanning electron microscope, measuring the area of the pores, and calculating the area ratio of the pores to the observed area.

The microporous layer having such a porosity can be obtained by controlling the basis weight of the microporous layer, the amount of the blended carbon material relative to the water repellent and the other materials, the kind of the carbon material, and the thickness of the microporous layer. In particular, it is effective to control the amount of the blended carbon material relative to the water repellent and the other materials, and the kind of the carbon material. A microporous layer having a high porosity can be obtained by increasing the amount of the blended carbon material relative to the water repellent and the other materials, and a microporous layer having a low porosity can be obtained by decreasing the amount of the blended carbon material.

The basis weight of the microporous layer is preferably in the range of 10 to 35 g/m$^2$. When the basis weight of the microporous layer is 10 g/m$^2$ or more, the surface of the carbon fiber nonwoven fabric can be reliably covered, and the reverse diffusion of the produced water is promoted. In addition, when the basis weight of the microporous layer

is 35 g/m$^2$ or less, blocking of the indentations and pores is suppressed, and the water discharge performance is further improved. The basis weight of the microporous layer is more preferably 30 g/m$^2$ or less, even more preferably 25 g/m$^2$ or less. The basis weight is more preferably 14 g/m$^2$ or more, even more preferably 16 g/m$^2$ or more. In addition, the basis weight of the gas diffusion electrode substrate of the present invention including the microporous layer is preferably 25 to 185 g/m$^2$.

Further, from the viewpoint that the electric resistance between the separator and the gas diffusion electrode can be reduced, it is preferable that part or all of the microporous layer permeate into the carbon fiber nonwoven fabric.

<Gas diffusion electrode, membrane electrode assembly, and polymer electrolyte fuel cell>

A gas diffusion electrode can be formed by providing a catalyst layer on the gas diffusion electrode substrate of the present invention. It is preferable that the catalyst layer contain, as a catalytic metal, porous carbon particles carrying a transition metal, particularly platinum or an alloy thereof on the surface thereof. The catalyst layer is formed on the bottom surface side of the carbon fiber nonwoven fabric. When the gas diffusion electrode substrate includes a microporous layer, the catalyst layer is formed on the surface of the microporous layer.

Moreover, a membrane electrode assembly can be obtained by forming a catalyst layer on both sides of a polymer electrolyte membrane, and further disposing and bonding a gas diffusion electrode including the gas diffusion electrode substrate of the present invention on the outer sides of the catalyst layers, or disposing and laminating the gas diffusion electrode of the present invention including the gas diffusion electrode substrate and the catalyst layer on both sides of a polymer electrolyte membrane. Further, one cell of a polymer electrolyte fuel cell can be obtained by disposing separators on both sides of the membrane electrode assembly.

<Method for manufacturing gas diffusion electrode substrate>

As an example, the gas diffusion electrode substrate of the present invention can be manufactured by a method including the steps of: A: pressing a surface of a carbon fiber precursor nonwoven fabric with a member having indentations and protrusions to form discontinuous protrusions; B: carbonizing the carbon fiber precursor nonwoven fabric obtained in step A to give a carbon fiber nonwoven fabric; and C: imparting a water repellent to the carbon fiber nonwoven fabric obtained in step B.

[Carbon fiber precursor nonwoven fabric]

The carbon fiber precursors are fibers that turn into carbon fibers by carbonization, and preferably have a carbonization rate of 15% or more, more preferably 30% or more. The carbon fiber precursors used in the present invention are not particularly limited. Examples thereof include polyacrylonitrile (PAN)-based fibers, pitch-based fibers, lignin-based fibers, polyacetylene-based fibers, polyethylene-based fibers, infusible fibers of these, polyvinyl alcohol-based fibers, cellulose-based fibers, and polybenzoxazole-based fibers. In particular, infusible PAN-based flame resistant fibers, which are highly tenacious and stretchable, and are easy to process, are preferable. The timing of infusibilizing the fibers may be either before or after the production of the nonwoven fabric, but it is preferable to infusibilize the fibers before being formed into a sheet since it is easy to uniformly control the infusibilization treatment. In addition, it is also possible to subject a non-infusible carbon fiber precursor nonwoven fabric to infusibilization treatment after step A described later. However, from the viewpoint of minimizing nonuniform deformation in step A, it is preferable to subject an infusible carbon fiber precursor nonwoven fabric to step A.

The carbonization rate can be determined according to the following equation.

$$\text{Carbonization rate (\%) = weight after}$$
$$\text{carbonization/weight before carbonization} \times 100$$

The carbon fiber precursor nonwoven fabric is a fabric formed by combining webs formed of carbon fiber precursors by entanglement, thermal bonding, bonding with a binder or the like. The web may be a dry-laid web such as a parallel-laid web or a cross-laid web, an air-laid web, a web made by wet forming, or a spunbonded web, a melt-blown web, or an electrospun web which is obtained by extrusion. In the case of infusibilizing PAN-based fibers obtained by a solution spinning method and making a web of the fibers, it is preferable to use a dry web or a wet web for obtaining a uniform sheet easily. In addition, a nonwoven fabric obtained by mechanically entangling dry webs is particularly preferable since it is easy to achieve shape stability in the process.

In addition, as described above, when a carbide adheres to the intersections of carbon fibers in the carbon fiber nonwoven fabric, the carbon fiber nonwoven fabric is excellent in electric conductivity and thermal conductivity. Therefore, the carbon fiber precursor nonwoven fabric may contain a binder. A method for incorporating a binder into the carbon fiber precursor nonwoven fabric is not particularly limited. Examples thereof include a method of impregnating the carbon fiber precursor nonwoven fabric with a binder solution or spraying a binder solution to the carbon fiber precursor nonwoven fabric, and a method of mixing thermoplastic resin fibers serving as a binder in the carbon fiber precursor nonwoven fabric in advance.

In the case where the carbon fiber precursor nonwoven fabric is impregnated with a binder solution or a binder solution is sprayed to the carbon fiber precursor nonwoven fabric, a thermosetting resin such as a phenol resin, an epoxy resin, a melamine resin, or a furan resin may be used as a binder. In particular, a phenol resin is preferable because of its high carbonization yield. However, in the case where the carbon fiber precursor nonwoven fabric is impregnated with a binder resin solution, a difference occurs in the shrinkage behavior between the carbon fiber precursors and the binder resin during the carbonization process. Accordingly, the carbon fiber nonwoven fabric is easily deteriorated in smoothness, and a migration phenomenon, that is, a phenomenon that the solution moves to the surface of the carbon fiber nonwoven fabric at drying of the binder, is easily caused, so that uniform treatment tends to be difficult.

In contrast, a method of mixing thermoplastic resin fibers serving as a binder in the carbon fiber precursor nonwoven fabric in advance is most preferable because this method achieves a uniform ratio of the carbon fiber precursors to the binder resin in the nonwoven fabric, and also causes little difference in the shrinkage behavior between the carbon fiber precursors and the binder resin. Preferable thermoplastic resin fibers are polyester fibers, polyamide fibers, and polyacrylonitrile fibers, which are relatively inexpensive.

The amount of the binder to be blended is, for an improvement in strength, electric conductivity, and thermal conductivity of the carbon fiber nonwoven fabric, preferably 0.5 parts by mass or more, more preferably 1 part by mass or more based on 100 parts by mass of the carbon fiber precursors. In addition, for an improvement in water discharge performance, the amount of the binder is preferably 80 parts by mass or less, more preferably 50 parts by mass or less.

Alternatively, the binder may be imparted to the carbon fiber precursor nonwoven fabric by impregnating the carbon fiber precursor nonwoven fabric with a binder solution or spraying a binder solution to the carbon fiber precursor nonwoven fabric after shaping discontinuous protrusions on the carbon fiber precursor nonwoven fabric in step A described later. Alternatively, the binder may be imparted to the carbon fiber nonwoven fabric through the process of impregnating the carbon fiber nonwoven fabric obtained by carbonization in step B described later with a binder solution or spraying a binder solution to the carbon fiber nonwoven fabric, and then subjecting the carbon fiber nonwoven fabric to carbonization again. However, if the binder is imparted after the discontinuous protrusions are formed, the binder solution tends to remain in portions other than the protrusions, and the adhesion amount of the binder tends to be uneven. Therefore, the binder is preferably imparted before the discontinuous protrusions are formed.

In view of improving the electric conductivity, it is further preferable that a conductive aid be added to the thermoplastic resin fibers serving as the binder or to the solution with which the carbon fiber nonwoven fabric is impregnated or which is to be sprayed to the carbon fiber nonwoven fabric. Examples of the conductive aid include carbon black, carbon nanotubes, carbon nanofibers, milled carbon fibers, and graphite.

On the other hand, if no carbide as a binder adheres to the intersections, carbon fibers are easy to move relative to each other, so that it is advantageous in that the carbon fibers are flexible and easy to handle in the manufacturing process. Therefore, it is also a preferable aspect that no binder is incorporated or the binder is not carbonized.

[Step A]

Step A is a step of shaping discontinuous protrusions on the surface of the carbon fiber precursor nonwoven fabric to give a carbon fiber precursor nonwoven fabric having discontinuous protrusions on the surface thereof. Such discontinuous protrusions can be formed by subjecting a carbon fiber nonwoven fabric obtained after the carbonization to laser processing or machining. This method, however, is not preferable because carbon fibers are inevitably cut at the wall surfaces of discontinuous protrusions during pore formation, resulting in deterioration in electric conductivity and thermal conductivity.

In step A, a surface of a carbon fiber precursor nonwoven fabric is pressed to form discontinuous protrusions. The method of pressing is not particularly limited as long as it does not involve cutting of the carbon fibers. The method may be a method of pressing a shaping member having indentations corresponding to discontinuous protrusions against the carbon fiber precursor nonwoven fabric, a method of pressing the carbon fiber precursor nonwoven fabric with a needle-like member, a method of pressing the carbon fiber precursor nonwoven fabric with water, or the like.

In particular, it is preferable to employ the method of pressing a shaping member having indentations corresponding to the discontinuous protrusions to be formed against the surface of the carbon fiber precursor nonwoven fabric. In this method, part of the surface of the carbon fiber precursor nonwoven fabric is physically pressed with the shaping member, whereby discontinuous protrusions can be formed without cutting the carbon fiber precursors. In this manner, a carbon fiber precursor nonwoven fabric having no broken fibers observed in peripheries of the discontinuous protrusions can be obtained.

The shape of the indentation corresponds to the transverse sectional shape of the discontinuous protrusion (the sectional shape obtained by cutting the discontinuous protrusion along a plane parallel to the surface of the shaping member), and may be any shape such as a circle, an ellipse, a doughnut shape, a square, a triangle, a polygon, and a star.

The longitudinal sectional shape of the indentation (the sectional shape obtained by cutting the discontinuous protrusion along a plane perpendicular to the surface of the shaping member) is also not particularly limited, and may be a substantially rectangular shape whose size does not change in the depth direction, or a substantially trapezoidal, substantially triangular, or substantially arcuate shape whose size changes in the depth direction. It is preferable that the longitudinal sectional shape be a trapezoidal shape, an arcuate shape or the like whose width increases with the depth position in terms of improvement in the water discharge efficiency.

Although the depth of the indentations in the surface of the shaping member is not particularly limited, the depth of the indentations is preferably equal to or larger than the height of the discontinuous protrusions in the gas diffusion electrode because the carbon fiber precursor nonwoven fabric easily shrinks in step B described later.

A more specific means for forming the discontinuous protrusions is not particularly limited, but embossing is preferable. Examples of the method for embossing include a method in which continuous pressing is performed with the use of an emboss roll having indentations and protrusions corresponding to the discontinuous protrusions and a flat roll, and a method in which batch pressing is performed with the use of a plate having such indentations and protrusions and a flat plate. The carbon fiber precursor nonwoven fabric is pressed preferably with the use of a heated roll and/or a heated plate so that the fabric will not restore its shape or lose the discontinuous protrusions in the carbonization in step B described later. The heating temperature in this process is preferably 200°C to 300°C, more preferably 220°C to 280°C in view of the shape stability of the discontinuous protrusions on a nonwoven fabric structure formed from carbon fiber precursors.

Furthermore, it is also a preferable aspect to press the carbon fiber precursor nonwoven fabric using a roll and/or a plate having no indentations before or after step A for controlling the density and thickness of the resulting gas diffusion electrode substrate.

In order to shape the discontinuous protrusions without causing fiber breakage, it is preferable to deform a carbon fiber precursor nonwoven fabric having a relatively low density. Thus, the carbon fiber precursor nonwoven fabric before being subjected to step A preferably has an apparent density of 0.02 to 0.20 g/cm$^3$, more preferably 0.05 to 0.15 g/cm$^3$.

In addition, the carbon fiber nonwoven fabric used in the gas diffusion electrode substrate preferably has an apparent density of 0.20 g/cm$^3$ or more for obtaining excellent electric conductivity and thermal conductivity, and preferably has an apparent density of 0.80 g/cm$^3$ or less for obtaining excellent gas diffusibility. For this purpose, it is preferable to set the apparent density of the carbon fiber precursor nonwoven fabric to 0.20 to 0.80 g/cm$^3$. In order to control the apparent density of the carbon fiber precursor nonwoven fabric, it is possible to adjust the apparent density by pressing the carbon fiber precursor nonwoven fabric with a flat roll or a flat plate after step A. From the viewpoint of controlling the shape of the discontinuous protrusions, it is preferable to adjust the apparent density of the carbon fiber precursor nonwoven fabric by simultaneously pressing not only the discontinuous protrusions but also the entire carbon fiber precursor nonwoven fabric in step A.

[Step B]

Step B is a step of carbonizing the carbon fiber precursor nonwoven fabric obtained in step A. The carbonization method is not particularly limited, and may be a method publicly known in the field of carbon fiber materials. A preferable method is firing in an inert gas atmosphere. The carbonization by firing in an inert gas atmosphere is preferably carried out at 800°C or higher with supply of an inert gas such as nitrogen or argon. The temperature for the firing is preferably 1500°C or higher, more preferably 1900°C or higher for easily achieving excellent electric conductivity and thermal conductivity. Meanwhile, the temperature is preferably 3000°C or lower in consideration of the operation cost of the heating furnace.

In the case where the carbon fiber precursor nonwoven fabric is formed of carbon fiber precursors before being infusibilized, it is preferable to perform the infusibilizing step before step B. This infusibilizing step is usually carried out in the air for a treatment time of 10 to 100 minutes at a temperature in the range of 150 to 350°C. In the case of a PAN-based infusible fiber, it is preferable to set the density in the range of 1.30 to 1.50 g/cm$^3$.

[Step C]

Step C is a step of imparting a water repellent to the carbon fiber nonwoven fabric obtained in step B. The water repellent is preferably imparted to the carbon fiber nonwoven fabric by applying the water repellent to the carbon fiber nonwoven fabric, and then heating the carbon fiber nonwoven fabric.

As a water repellent, a fluoropolymer is preferably used because it is excellent in corrosion resistance. Examples of the fluoropolymer include polytetrafluoroethylene (PTFE), a tetrafluoroethylene-hexafluoropropylene copolymer (FEP), and a tetrafluoroethylene-perfluoroalkyl vinyl ether copolymer (PFA).

The amount of the applied water repellent is preferably 1 to 50 parts by mass, more preferably 3 to 40 parts by mass based on 100 parts by mass of the carbon fiber nonwoven fabric. An amount of the applied water repellent of 1 part by mass or more is preferable because the carbon fiber nonwoven fabric is excellent in water discharge performance. Meanwhile, an amount of the applied water repellent of 50 parts by mass or less is preferable because the carbon fiber nonwoven fabric is excellent in electric conductivity.

[Microporous layer forming step]

A microporous layer may further be formed on the carbon fiber nonwoven fabric obtained by the above-mentioned method.

A carbon coating liquid containing a carbon material used for forming the microporous layer may contain a dispersion medium such as water or an organic solvent, or may contain a dispersing aid such as a surfactant. The dispersion medium is preferably water, and the dispersing aid is more preferably a nonionic surfactant. Further, the carbon coating liquid may contain various carbon materials other than carbon, and a water repellent.

As a method for applying the carbon coating liquid, screen printing, rotary screen printing, spray spraying, intaglio printing, gravure printing, die coater coating, bar coating, blade coating or the like is employed.

Further, after the application of the carbon coating liquid to the carbon fiber nonwoven fabric, the coating liquid is preferably dried at a temperature of 80 to 120°C. That is, the product after the application is placed in a dryer set at a temperature of 80 to 120°C, and dried for a period in the range of 5 to 30 minutes. Although the amount of drying air may be appropriately determined, sudden drying is undesirable since it may induce fine cracks in the surface.

[Catalyst layer forming step]

A catalyst layer may be formed on the gas diffusion electrode substrate obtained by the above-mentioned method to form a gas diffusion electrode. The catalyst layer can be formed by applying a catalyst slurry containing carrier particles carrying catalytic metal particles of platinum or an alloy thereof together with an electrolyte such as Nafion to the gas diffusion electrode substrate by a printing method, a spray method, an ink jet method, a die coater method, a transfer method, or the like.

EXAMPLES

1. Structure of gas diffusion electrode substrate

(1) Thickness

The thickness was measured with a thickness gauge using a probe having a diameter of 5 mm in a state where the gas diffusion electrode substrate was pressurized at a surface pressure of 0.15 MPa.

(2) Shape of protrusions, height of protrusions, and diameter of minimum circumscribed circle of top surface

The shape of the protrusions was observed with a laser microscope (VK-9710, manufactured by KEYENCE CORPORATION), and measured using a shape analysis application (VK-Analyzer Plus, manufactured by KEYENCE CORPORATION). Measurement and analysis of the indentations and protrusions were performed in a field of view of 1000 $\mu$m $\times$ 1400 $\mu$m, and the shape of a top surface of a protrusion was observed on the assumption that the top surface was present at the height position corresponding to the thickness of the gas diffusion electrode substrate after pressurization. The difference between the height of the top surface and the height of the surface of the gas diffusion electrode substrate not having the protrusions thereon was taken as the height of the protrusions. The diameter of the minimum circumscribed circle was measured using the same top surface.

(3) Number of protrusions

The protrusions were observed with a 3D measurement microscope (VR 3050, manufactured by KEYENCE CORPORATION), and the number of protrusions was measured using an analysis application (VR-H1A). Measurement and analysis were performed in a field of view of 8 mm $\times$ 6 mm, and the number of top surfaces of the protrusions present at the height position corresponding to the thickness of the gas diffusion electrode substrate after pressurization was measured.

(4) Orientation of carbon fibers in height direction on wall surfaces of discontinuous protrusions

Whether or not the carbon fibers that constitute the wall surfaces of the discontinuous protrusions are oriented in the height direction was determined by observing the carbon fibers with a laser microscope (VK-9710, manufactured by KEYENCE CORPORATION), and making the determination using a shape analysis application (VK-Analyzer Plus, manufactured by KEYENCE CORPORATION). A field of view of 1000 $\mu$m × 1400 $\mu$m was observed. If there was even one carbon fiber that traversed both the intersection line between the plane that divided the discontinuous protrusions at the depth of one third of the discontinuous protrusions and the wall surfaces of the discontinuous protrusions, and the intersection line between the plane that divided the discontinuous protrusions at the depth of two thirds of the discontinuous protrusions and the wall surfaces of the discontinuous protrusions, it was determined that there were fibers oriented in the height direction of the discontinuous protrusions.

2. Power generation performance

To both surfaces of a fluorine-based electrolyte membrane Nafion 212 (manufactured by DuPont), a catalyst layer formed of platinum on carbon and Nafion (the amount of platinum in the layer was 0.2 mg/cm$^2$) was bonded by hot pressing to produce a catalyst-coated membrane (CCM). A gas diffusion electrode substrate was placed on both surfaces of the CCM, and the laminate was hot-pressed again to give a membrane electrode assembly (MEA). The MEA having a gasket (thickness: 70 $\mu$m) around the gas diffusion electrode substrates was set in a single cell (5 cm$^2$, serpentine flow path) manufactured by ElectroChem, Inc.
Electric power was generated at a cell temperature of 60°C, dew points of hydrogen and air of 60°C, flow rates of hydrogen and air of 100 cc/min and 250 cc/min, respectively, and a current density of 0.6 A/cm$^2$ with the gas exit being open (no pressurization), and the voltage at that time was measured.

[Example 1]

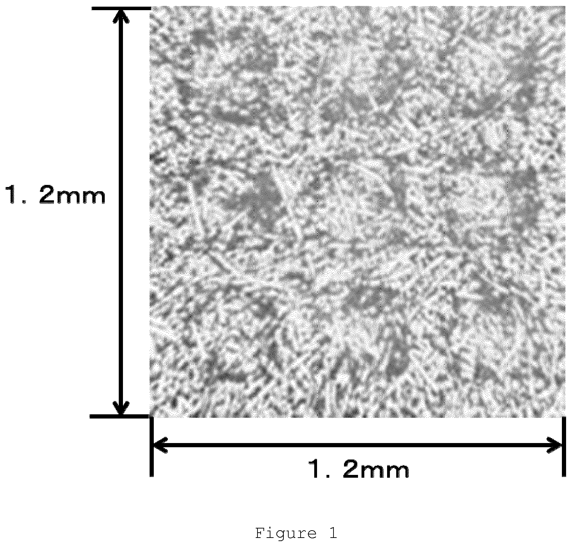

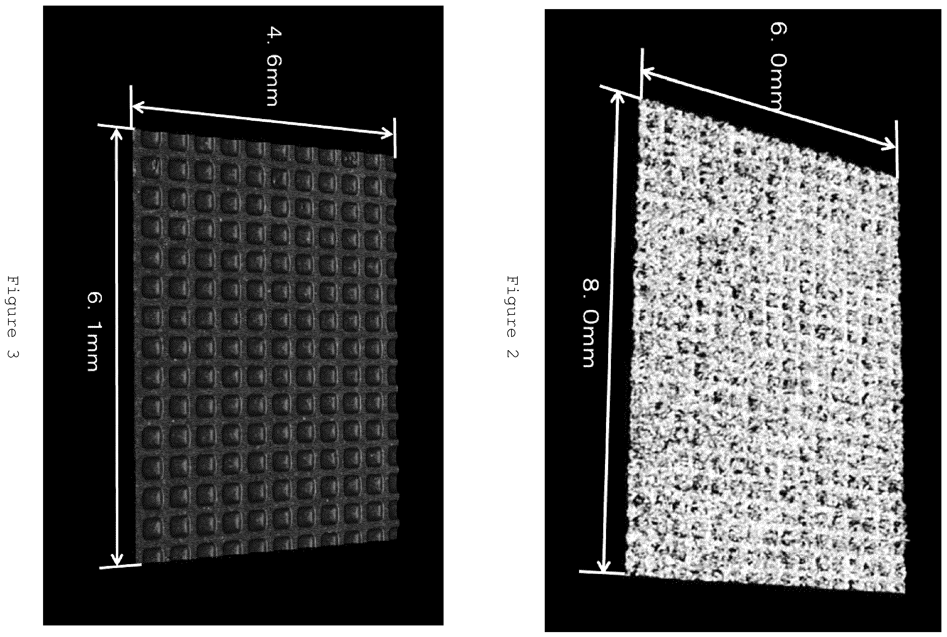

A crimped yarn of a PAN-based flame resistant yarn was cut to have a number average fiber length of 76 mm, and then a web obtained by carding and cross-laying the yarn into a sheet was subjected to needle punching at a needle density of 250 needles/cm$^2$ to prepare a carbon fiber precursor nonwoven fabric.
On one surface of the carbon fiber precursor nonwoven fabric, a shaping member shown in Fig. 3, which had 565/cm$^2$ indentations each having a 300-$\mu$m square opening and a depth of 80 $\mu$m dispersedly formed in isotropic and equally spaced dots at a pitch of 420 $\mu$m in both MD and CD, was laminated. The laminate was pressed at 1 MPa for 3 minutes using a press heated to 250°C.
Thereafter, in a nitrogen atmosphere, the temperature was raised from room temperature to 1500°C over 3 hours, and the laminate was heated at 1500°C for 15 minutes for carbonization. In this manner, a carbon fiber nonwoven fabric shown in Figs. 1 and 2 was obtained. The carbon fiber nonwoven fabric had discontinuous protrusions, and the carbon fibers were oriented in the height direction on the wall surfaces of the protrusions and continuous to the top surfaces. The carbonization rate determined from the weight change before and after the carbonization was 52%.
The carbon fiber nonwoven fabric was impregnated with an aqueous dispersion of a PTFE resin ("POLYFLON" (registered trademark) PTFE dispersion D-1E (manufactured by DAIKIN INDUSTRIES, LTD.)) prepared so as to have a solid content concentration of 3% in weight fraction, and dried at 90°C for 30 minutes to impart 5% by weight of PTFE to the carbon fiber nonwoven fabric.
Then, to one surface of the carbon fiber nonwoven fabric, a mixture of 7.7% by weight of acetylene black "DENKA BLACK" (registered trademark) (manufactured by Denki Kagaku Kogyo Co., Ltd.), 2.5% by weight of a PTFE resin ("POLYFLON" (registered trademark) PTFE dispersion D-1E (manufactured by DAIKIN INDUSTRIES, LTD.), which is an aqueous dispersion containing 60 parts by mass of a PTFE resin, was used), 14.0% by weight of a surfactant "TRITON" (registered trademark) X-100 (manufactured by NACALAI TESQUE, INC.), and 75.8% by weight of pure water was applied using a slit die coater. After the application of the carbon coating liquid, the carbon fiber nonwoven fabric was heated at 120°C for 10 minutes and at 380°C for 10 minutes to form a microporous layer having a basis weight of 20 g/m$^2$ on the carbon fiber nonwoven fabric, whereby a gas diffusion electrode substrate was obtained.

[Example 2]

A gas diffusion electrode substrate was obtained in the same manner as in Example 1 except that three webs were laminated to increase the basis weight.

[Example 3]

On one surface of a carbon fiber precursor nonwoven fabric obtained in the same manner as in Example 1, a shaping member having a thickness of 1 mm, which had 45/cm$^2$ indentations each having a 1000-$\mu$m square opening and a depth of 80 $\mu$m dispersedly formed in isotropic and equally spaced dots at a pitch of 1500 $\mu$m in both MD and CD, was laminated. The laminate was pressed at 1 MPa for 3 minutes using a press heated to 250°C. A gas diffusion electrode substrate was obtained in exactly the same manner as in Example 1 except for the above.

[Example 4]

On one surface of a carbon fiber precursor nonwoven fabric obtained in the same manner as in Example 1, a shaping member having a thickness of 1 mm, which had 2500/cm$^2$ indentations each having a 140-$\mu$m square opening and a depth of 80 $\mu$m dispersedly formed in isotropic and equally spaced dots at a pitch of 200 $\mu$m in both MD and CD, was laminated. The laminate was pressed at 1 MPa for 3 minutes using a press heated to 250°C. A gas diffusion electrode substrate was obtained in exactly the same manner as in Example 1 except for the above.

[Example 5]

On one surface of a carbon fiber precursor nonwoven fabric obtained in the same manner as in Example 2, a shaping member having a thickness of 1 mm, which had 650/cm$^2$ indentations each having a 300-$\mu$m square opening and a depth of 250 $\mu$m dispersedly formed in isotropic and equally spaced dots at a pitch of 420 $\mu$m in both MD and CD, was laminated. The laminate was pressed at 1 MPa for 3 minutes using a press heated to 250°C. A gas diffusion electrode substrate was obtained in exactly the same manner as in Example 2 except for the above.

[Example 6]

A flat shaping member having a thickness of 1 mm was laminated on a carbon fiber precursor nonwoven fabric obtained in the same manner as in Example 1, and the laminate was pressed at 1 MPa for 3 minutes using a press heated to 250°C.

Subsequently, discontinuous protrusions were formed by cutting the surface of the carbon fiber nonwoven fabric that was obtained by firing in the same manner as in Example 1. A gas diffusion electrode substrate was obtained in exactly the same manner as in Example 1 except for the above.

[Example 7]

The same treatment as that in Example 1 was carried out except that no microporous layer was formed to give a gas diffusion electrode substrate.

[Comparative Example 1]

On one surface of a carbon fiber precursor nonwoven fabric obtained in the same manner as in Example 2, a shaping member having a thickness of 1 mm, which had indentations each having an opening 5 mm in diameter and a depth of 300 $\mu$m dispersedly formed in isotropic and equally spaced dots at a pitch of 1 cm in both MD and CD, was laminated. The laminate was pressed at 1 MPa for 3 minutes using a press heated to 250°C.

A microporous layer was formed in the same manner as in Example 1 without any water repellent imparted thereto to give a gas diffusion electrode substrate.

[Comparative Example 2]

On one surface of a carbon fiber precursor nonwoven fabric obtained in the same manner as in Example 1, a shaping member having a ridge width of 500 $\mu$m, a groove width of 500 $\mu$m, a pitch of 1 mm, and a ridge height of 100 $\mu$m was laminated. The laminate was pressed at 1 MPa for 3 minutes using a press heated to 250°C to give a carbon fiber nonwoven fabric having continuous protrusions.

A water repellent was imparted to the carbon fiber nonwoven fabric and a microporous layer was formed thereon in the same manner as in Example 1 to give a gas diffusion electrode substrate.

When the gas diffusion electrode substrate was used in a power generation test, the gas diffusion electrode substrate was set with the extending direction of the continuous protrusions formed on the gas diffusion electrode substrate the same as the direction in which the non-bending distance of the serpentine type reaction gas flow path formed in the separator was long.

[Comparative Example 3]

On one surface of a carbon fiber precursor nonwoven fabric obtained in the same manner as in Example 1, a shaping member, which had indentations each having a 1500-μm square opening and a depth of 80 μm dispersedly formed in isotropic and equally spaced dots at a pitch of 2.1 mm in both MD and CD, was laminated. The laminate was pressed at 1 MPa for 3 minutes using a press heated to 250°C to give a carbon fiber nonwoven fabric having continuous protrusions.

A water repellent was imparted to the carbon fiber nonwoven fabric and a microporous layer was formed thereon in the same manner as in Example 1 to give a gas diffusion electrode substrate.

[Comparative Example 4]

In the same manner as in Example 1 except that no water repellency treatment was carried out and no microporous layer was formed, a gas diffusion electrode substrate was obtained.

Tables 1 and 2 show the constitution of the gas diffusion electrode substrate prepared in each of the examples and comparative examples, and the evaluation results of the power generation performance of the fuel cell constructed using the gas diffusion electrode substrate.

[Table 1]

|  | Unit | Example 1 | Example 2 | Example 3 | Example 4 | Example 5 |
|---|---|---|---|---|---|---|
| Thickness | μm | 200 | 600 | 200 | 200 | 600 |
| Shape of protrusions | – | Discontinuous protrusions (270-μm square) | Discontinuous protrusions (270-μm square) | Discontinuous protrusions (900-μm square) | Discontinuous protrusions (126-μm square) | Discontinuous protrusions (270-μm square) |
| Height of protrusions | μm | 72 | 72 | 72 | 72 | 230 |
| Arrangement pitch of protrusions | μm | 380 | 380 | 1350 | 180 | 380 |
| Number of protrusions | (protrusions/cm$^2$) | 690 | 690 | 55 | 3090 | 690 |
| Diameter of minimum circumscribed circle of protrusion | μm | 380 | 380 | 1270 | 180 | 380 |
| Fibers oriented in thickness direction | – | Yes | Yes | Yes | Yes | Yes |
| Water repellency treatment | – | Yes | Yes | Yes | Yes | Yes |
| Microporous layer | – | Yes | Yes | Yes | Yes | Yes |
| Power generation performance | V | 0.52 | 0.41 | 0.42 | 0.54 | 0.44 |

|  | Unit | Example 6 | Example 7 | Comparative Example 1 | Comparative Example 2 | Comparative Example 3 | Comparative Example 4 |
|---|---|---|---|---|---|---|---|
| Thickness | μm | 200 | 200 | 600 | 200 | 200 | 200 |
| Shape of protrusions | – | Discontinuous protrusions (270-μm square) | Discontinuous protrusions (270-μm square) | Discontinuous protrusions (circle 4.5 mm in diameter) | Continuous protrusions (straight line 450 μm in width) | Discontinuous protrusions (1350-μm square) | Discontinuous protrusions (270-μm square) |
| Height of protrusions | μm | 72 | 72 | 270 | 90 | 72 | 72 |
| Arrangement pitch of protrusions | μm | 380 | 380 | 9000 | 900 | 1890 | 380 |
| Number of protrusions | (protrusions/cm$^2$) | 690 | 690 | 1 | 11 | 28 | 690 |
| Diameter of minimum circumscribed circle of protrusion | μm | 380 | 380 | 4500 | – | 1910 | 380 |
| Fibers oriented in thickness direction | – | No | Yes | Yes | Yes | Yes | Yes |
| Water repellency treatment | – | Yes | Yes | No | Yes | Yes | No |
| Microporous layer | – | Yes | No | Yes | Yes | Yes | No |
| Power generation performance | V | 0.35 | 0.37 | 0.15 | 0.22 | 0.25 | 0.18 |

**Claims**

1. A gas diffusion electrode substrate, comprising a carbon fiber nonwoven fabric having 30/cm$^2$ to 5000/cm$^2$ discontinuous protrusions dispersedly formed on at least one surface thereof, and a water repellent imparted to the carbon fiber nonwoven fabric.

2. The gas diffusion electrode substrate according to claim 1, wherein the discontinuous protrusions have a height of 5 to 250 μm.

3. The gas diffusion electrode substrate according to claim 1 or 2, wherein the discontinuous protrusions are dispersedly formed in isotropic and equally spaced dots.

4. The gas diffusion electrode substrate according to claim 3, wherein the plurality of discontinuous protrusions have an arrangement pitch of 1 mm or less.

5. The gas diffusion electrode substrate according to any one of claims 1 to 4, wherein the discontinuous protrusions each have a diameter of a minimum circumscribed circle of 1 cm or less.

6. The gas diffusion electrode substrate according to any one of claims 1 to 5, wherein the discontinuous protrusions present in a unit area have a top surface perimeter of 0.1 to 20 $km/m^2$.

7. The gas diffusion electrode substrate according to any one of claims 1 to 6, having, in plan view, no broken carbon fibers observed on wall surfaces of the discontinuous protrusions.

8. The gas diffusion electrode substrate according to any one of claims 1 to 7, wherein at least part of carbon fibers that constitute wall surfaces of the discontinuous protrusions are oriented in a height direction of the discontinuous protrusions.

9. The gas diffusion electrode substrate according to claim 8, wherein the carbon fibers oriented in the height direction of the discontinuous protrusions are continuous to top surfaces of the discontinuous protrusions.

10. The gas diffusion electrode substrate according to any one of claims 1 to 9, further comprising a microporous layer.

11. A gas diffusion electrode, comprising the gas diffusion electrode substrate according to any one of claims 1 to 10, and a catalyst layer provided on the gas diffusion electrode substrate.

12. A membrane electrode assembly, comprising the gas diffusion electrode substrate according to any one of claims 1 to 10.

13. A polymer electrolyte fuel cell, comprising the gas diffusion electrode substrate according to any one of claims 1 to 10.

14. A method for manufacturing a gas diffusion electrode substrate having a plurality of discontinuous protrusions on at least one surface thereof, comprising the steps of:

A: pressing a surface of a carbon fiber precursor nonwoven fabric with a member having indentations and protrusions to form discontinuous protrusions;
B: carbonizing the carbon fiber precursor nonwoven fabric obtained in step A to give a carbon fiber nonwoven fabric; and
C: imparting a water repellent to the carbon fiber nonwoven fabric obtained in step B.

Figure 1

Figure 2

Figure 3

## INTERNATIONAL SEARCH REPORT

| International application No. |
| --- |
| PCT/JP2016/065725 |

A. CLASSIFICATION OF SUBJECT MATTER
*H01M4/96*(2006.01)i, *D04H1/4242*(2012.01)i, *H01M4/86*(2006.01)i, *H01M4/88*
(2006.01)i, *H01M8/10*(2016.01)i

According to International Patent Classification (IPC) or to both national classification and IPC

B. FIELDS SEARCHED

Minimum documentation searched (classification system followed by classification symbols)
H01M4/96, D04H1/4242, H01M4/86, H01M4/88, H01M8/10

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2005-174621 A (Hitachi, Ltd.), 30 June 2005 (30.06.2005), claims 8, 10; paragraphs [0009], [0012]; fig. 1 to 4 (Family: none) | 1-14 |
| A | JP 2007-299654 A (Equos Research Co., Ltd.), 15 November 2007 (15.11.2007), claims 1, 5, 6; paragraphs [0007], [0016] to [0018]; fig. 1, 2 (Family: none) | 1-13 |

[X] Further documents are listed in the continuation of Box C.     [ ] See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>05 August 2016 (05.08.16) | Date of mailing of the international search report<br>16 August 2016 (16.08.16) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

EP 3 316 367 A1

## INTERNATIONAL SEARCH REPORT

International application No.

PCT/JP2016/065725

C (Continuation). DOCUMENTS CONSIDERED TO BE RELEVANT

| Category* | Citation of document, with indication, where appropriate, of the relevant passages | Relevant to claim No. |
|---|---|---|
| A | JP 9-283155 A (Tanaka Kikinzoku Kogyo Kabushiki Kaisha), 31 October 1997 (31.10.1997), claims 1 to 3; paragraphs [0005], [0011]; fig. 2 (Family: none) | 1-13 |
| A | JP 2013-20843 A (Mitsubishi Rayon Co., Ltd.), 31 January 2013 (31.01.2013), claims 1, 2; paragraphs [0008], [0024], [0025], [0039] to [0041], [0052]; fig. 1 (Family: none) | 1-13 |
| A | JP 2003-64566 A (Fujikoh Corp.), 05 March 2003 (05.03.2003), claim 1; paragraphs [0004], [0027]; fig. 1, 2, 6 (Family: none) | 14 |
| A | JP 2010-73563 A (Nissan Motor Co., Ltd.), 02 April 2010 (02.04.2010), claim 1; paragraphs [0016], [0037] to [0040]; fig. 1, 8 (Family: none) | 14 |
| E,A | WO 2016/093041 A1 (Toray Industries, Inc.), 16 June 2016 (16.06.2016), claim 1; paragraphs [0010], [0037], [0062]; fig. 1 (Family: none) | 1-13 |
| P,A | WO 2015/098530 A1 (Toray Industries, Inc.), 02 July 2015 (02.07.2015), claims 1, 3; paragraphs [0091] to [0097]; fig. 2 & CA 2927098 A1 claims 1, 3; examples 1, 2; fig. 2 | 14 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11511289 PCT
- JP 2013020843 A
- JP 2003017076 A
- JP 2005206968 A

### Non-patent literature cited in the description

- **ISHIZAKI et al.** *Kagaku Kogaku Ronbunshu,* 2014, vol. 40, 320-326